# EUROPÄISCHE PATENTSCHRIFT

(11) **EP 1 310 750 B1**
(45) Veröffentlichungstag und Bekanntmachung des Hinweises auf die Patenterteilung: **17.06.2009**
(21) Anmeldenummer: 02018342.2
(22) Anmeldetag: 14.08.2002
(51) Int. Cl.: F25C 1/14, A23G 9/12

(54) **Maschine zum Bearbeiten von Lebensmitteln, insbesondere Speiseeismaschine**
Food processing machine, in particular an ice cream machine
Machine pour le traitement de produits alimentaires, en particulier une machine à crème glacée

(30) Priorität: 08.11.2001 IT MI20010584 U
(43) Veröffentlichungstag der Anmeldung: 14.05.2003
(60) Teilanmeldung: 09004058.5
(73) Patentinhaber: Telme S.P.A., 26845 Codogno (IT)
(72) Erfinder: Cigolini, Aldo, 26861 Retegno di Fombio (LO) (IT)
(74) Vertreter: Manitz, Finsterwald & Partner GbR

(56) Entgegenhaltungen:
- WO-A-03/068029
- FR-A- 2 542 578
- GB-A- 1 313 719
- GB-A- 2 146 108
- US-A- 5 927 098

## Beschreibung

Die vorliegende Erfindung betrifft eine Maschine zum Bearbeiten von Lebensmitteln unter mindestens zeitweiser Kühlung derselben, insbesondere Speiseeismaschine, mit einem Behälter und einer Kühleinrichtung, umfassend einen Kühlkreislauf mit einem Kompressor und einem Verdampfer in Form mindestens einer um den Behälter gewundenen Kühlschlange.

Als Speiseeismaschinen ausgebildete Maschinen dieser Art weisen üblicherweise einen zylindrischen, insbesondere aus Edelstahl gebildeten Behälter auf, in dem ein Rührwerk angeordnet ist, dessen Rührmesser in schabendem Eingriff mit der Innenwand des Zylinders stehen. Die Zylinderachse und die Drehachse des Rührwerks können horizontal oder vertikal angeordnet sein. Um die für die Eisbereitung notwendige Abkühlung der im Behälter vorhandenen Masse zu erreichen, weisen bekannte Speiseeismaschinen dieser Art einen Kühlkreislauf mit einem Kompressor und einem als Kühlschlange ausgebildeten Verdampfer auf, wobei die Kühlschlange um den Mantel des Zylinders herum und eventuell auch am Zylinderboden angeordnet ist.

Um ein ausreichend schnelles Abkühlen auch bei maximaler Befüllung des Behälters zu gewährleisten, muss die Kühlleistung der Kühleinrichtung entsprechend groß gewählt werden. Dies hat einen entsprechend großen Energieverbrauch zur Folge, der auch bei nicht maximaler Befüllung gegeben ist. Es werden daher üblicherweise Maschinen mit verschiedenen Volumina und verschiedenen Kühlleistungen angeboten. Aber auch mit diesen werden oft unterschiedliche Mengen produziert, je nachdem, um welche Sorte es sich handelt und in welcher Saison produziert wird. Bekanntermaßen wird beispielsweise Vanilleeis immer in größeren Mengen benötigt als andere Sorten und im Sommer von allen Sorten mehr als in der Vor- und Nachsaison oder im Winter.

Dokument WO 03/068029 gehört zum Stand der Technik gemäß Artikel 54(3) EPÜ.

Der Erfindung liegt die Aufgabe zugrunde, Maschinen der eingangs genannten Art zu verbessern. Insbesondere soll eine effizientere Energieausnutzung ermöglicht werden.

Diese Aufgabe wird dadurch gelöst, dass mindestens ein zweiter Kühlkreislauf mit einem zweiten Kompressor und einem zweiten Verdampfer in Form einer von den Behälter gewundenen Kühlschlange vorgesehen wobei die Kühlschlangen parallel zueinander und derart um den Behälter herum angeordnet sind, dass sich die Windungen der jeweiligen Kühlschlangen untereinander abwechseln, dass die Kühlkreisläufe voneinander getrennt sind ist und dass die Kühlkreisläufe wahlweise einsetzbar sind.

Durch das Vorsehen mindestens eines weiteren Kühlkreislaufs und der Möglichkeit, wahlweise die Kühlkreisläufe einzusetzen, kann eine effizientere Energieausnutzung erreicht werden. Insbesondere kann bei nicht voller Befüllung oder bei gewünschter längerer Behandlungszeit nur ein Kühlkreislauf eingesetzt werden, während nur bei tatsächlichem Bedarf beide oder alle Kühlkreisläufe und damit die volle Kühlleistung eingesetzt werden müssen. Dabei hat sich gezeigt, dass sich die erforderliche Bearbeitungszeit bei Verwendung nur eines von zwei Kühlkreisläufen, also bei Einsatz nur der halben Leistung, nicht verdoppelt, sondern lediglich um 40 - 50 % erhöht. Ein weiterer Vorteil besteht darin, dass bei kälteempfindlichem Gut durch Einschalten nur eines Kühlkreislaufes mit verringerter Kälteleistung gearbeitet und das Gut dadurch geschont werden kann.

Die Kühlkreisläufe sind voneinander getrennt und weisen jeweils einen eigenen Kompressor auf. Dies ermöglicht die Verwendung von Kompressoren mit geringerer Leistung, so dass bei Abschalten eines Kühlkreislaufs nur ein Kompressor in Betrieb ist. Dadurch kann die Energieeinsparung weiter erhöht werden.

Die Kompressoren der Kühlkreisläufe können untereinander gleiche oder unterschiedliche Leistung aufweisen. Bei unterschiedlicher Leistung kann durch entsprechende Auswahl des einen, des anderen oder beider Kühlkreisläufe eine noch bessere Anpassung an die tatsächlich erforderliche Kühlleistung erreicht und damit die Energieausnutzung weiter verbessert werden.

In allen Fällen ist es bevorzugt, wenn die Summe der Leistungen beider oder aller Kompressoren kleiner ist als die Leistung des einen Kompressors einer herkömmlichen Maschine gleicher Kapazität. Es hat sich nämlich gezeigt, dass trotz der geringeren Gesamtleistung der Kompressoren dasselbe Ergebnis in der gleichen Zeit erzielt werden kann. Auf diese Weise kann daher eine deutliche Energieeinsparung erzielt werden.

Der Behälter kann beispielsweise eine maximale Füllmenge von ca. 18 bis ca. 20 l aufweisen. Für einen derartigen Behälter können bevorzugt zwei wahlweise einschaltbare Kompressoren mit jeweils einer Leistung von ca. 2 kW bis 2,5 kW vorgesehen sein. Eine derartige Ausgestaltung hat sich als vorteilhaft erwiesen.

Die Kühlschlangen der Kühlkreisläufe sind gemäß der Erfindung parallel zueinander angeordnet. Damit kann gewährleistet werden, dass beide Verdampfer gleichermaßen in Wärmekontakt mit den zu behandelnden Stoffen treten können.

Gemäß der Erfindung sind die Kühlschlangen derart um den Behälter herum angeordnet, dass sich die Windungen der jeweiligen Kühlschlangen untereinander abwechseln. Damit kann gewährleistet werden, dass unabhängig von den im Einzelfall eingesetzten Kühlschlangen im Wesentlichen die gesamte Behälterfläche gekühlt wird.

Nach einer bevorzugten Ausgestaltung der Erfindung sind die Kühlschlangen auf der Außenseite des Behälters, insbesondere an dessen Mantelund Bodenfläche, angeordnet und ist im Innern des Behälters ein Rührwerk vorgesehen, dessen Rührmesser mit der Innenwand des Behälters in schabendem Eingriff stehen. Eine derartige Ausgestaltung ist insbesondere für die Herstellung von Speiseeis geeignet und hat sich als besonders vorteilhaft herausgestellt.

Nach einer weiteren Ausgestaltung der Erfindung weist der Behälter im Bereich seines Bodens, insbesondere im Übergangsbereich zwischen Boden und Seitenwand, eine Ausgabe- und/oder Ablassöffnung auf. Die Entnahme des fertigen Produktes kann dadurch erleichtert werden. Außerdem kann Reinigungsflüssigkeit und dergleichen durch diese Öffnung abgelassen werden.

Besonders bevorzugt ist es dabei, wenn die Drehrichtung des Rührwerks zum Ausgeben des fertigen Produktes umkehrbar ist. Die Ausgabe kann dadurch beschleunigt werden. Außerdem wird dadurch eine weitgehend vollständige Entleerung des Behälters erreicht.

Das Rührwerk kann eine horizontale Drehachse aufweisen. Bevorzugt ist es jedoch, wenn das Rührwerk eine vertikale Drehachse aufweist. Damit kann ein einfacher Aufbau der Maschine erreicht werden. Außerdem ist die Befüllung der Maschine erleichtert.

Die Dauer eines jeweiligen Bearbeitungszyklus kann über den Zeitablauf und/oder die Temperatur und/oder die Konsistenz, das heißt, über den Widerstand beim Rühren des Endproduktes steuerbar sein. Je nach Anwendungsfall ist die eine oder die andere Lösung vorteilhaft.

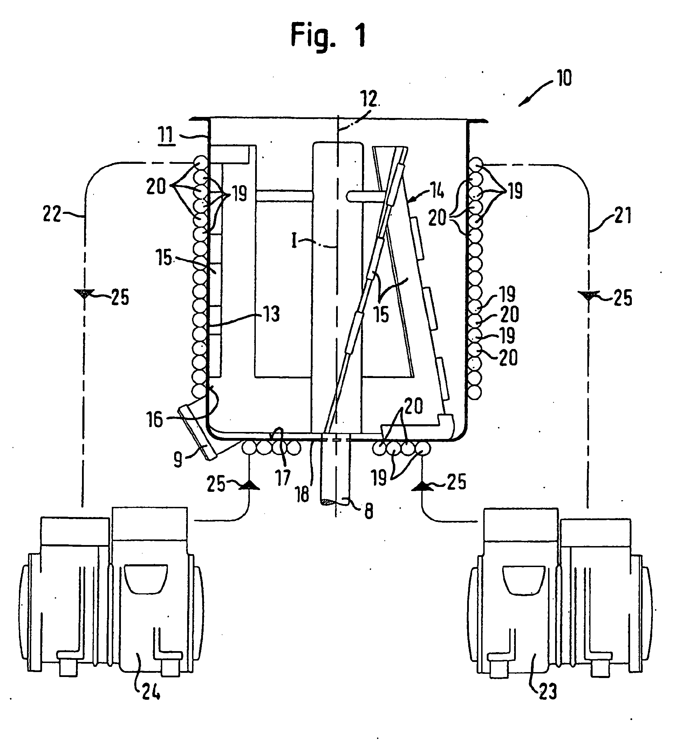

Ein Ausführungsbeispiel der Erfindung ist in der Zeichnung dargestellt und wird nachfolgend beschrieben. Es zeigt als einzige Figur in schematischer Darstellung
- Fig. 1: einen Querschnitt durch einen Teil einer erfindungsgemäßen Speiseeismaschine mit zwei Kompressoren und angedeuteten Kühlkreisläufen.

Die dargestellte Speiseeismaschine 10 umfasst einen Behälter 11 mit vertikaler Behälterachse 12 und einem in dem Behälter 11 angeordneten Rührwerk 14 mit Rührmessern 15, die mit der Innenseite 16 der Seitenwand 13 des Behälters 11 sowie mit der Innenseite 17 von dessen Boden 18 in schabendem Eingriff stehen. Die Drehachse I des Rührwerks 14 fällt mit der Behälterachse 12 zusammen. Über einen nicht dargestellten Antriebsmotor und eine Welle 8 ist das Rührwerk 14 um seine Achse I antreibbar, wobei die Drehrichtung bevorzugt umkehrbar ausgebildet ist.

Auf der Außenseite der Behälterseitenwand 13 und des Behälterbodens 18 sind jeweils Kühlschlangen 19, 20 angeordnet. Die Kühlschlangen 19 und 20 sind dabei so um die Seitenwand 13 des Behälters 11 herum geschlungen angeordnet, dass sich die Windungen der Kühlschlangen 19 mit den Windungen der Kühlschlange 20 abwechseln. Dasselbe gilt für die Windungen der Kühlschlangen 19 und 20 auf der Außenseite des Bodens 18 des Behälters 11.

Die Kühlschlange 19 ist an einen ersten Kühlkreislauf 21, die Kühlschlange 20 an einen zweiten Kühlkreislauf 22 angeschlossen. Beide Kühlkreisläufe 21 und 22 sind vollständig voneinander getrennt und weisen jeweils einen eigenen Kompressor 23, 24 auf. Die Kompressoren können dabei gleiche oder unterschiedliche Leistung aufweisen. Die Fließrichtung des Kühlmediums durch die Kühlkreisläufe 21 und 22 ist jeweils mit Pfeilen 25 angedeutet.

Im Übergangsbereich zwischen dem Boden 18 und der Seitenwand 13 des Behälters 11 weist dieser eine Ausgabe- und Ablassöffnung 9 auf, die über hier nicht dargestellte Mittel verschließbar ist. Das obere Ende des Behälters 11 ist außerdem durch einen hier ebenfalls nicht dargestellten, bevorzugt durchsichtigen Deckel verschließbar.

Zum Betrieb der erfindungsgemäßen Speiseeismaschine wird zunächst der Behälter 11 mit den Zutaten des herzustellenden Eises befüllt. Des Weiteren wird das Rührwerk 14 in Gang gesetzt und einer der beiden Kühlkreisläufe 21, 22 oder beide Kühlkreisläufe 21 und 22 aktiviert, indem einer oder beide Kompressoren 23, 24 eingeschaltet werden. Insbesondere bei geringer Befüllung des Behälters 11 oder bei gewünschter längerer Behandlungsdauer oder bei kälteempfindlichen Zutaten wird nur einer der beiden Kühlkreisläufe 21, 22 aktiviert, während insbesondere bei voller Befüllung des Behälters 11 oder für eine möglichst kurze Behandlungsdauer beide Kühlkreisläufe 21, 22 aktiviert werden. Dadurch kann der Energieverbrauch dem jeweiligen tatsächlichen Bedarf angepasst werden.

Nach Fertigstellung des Endprodukts werden die Kühlkreisläufe 21, 22 abgeschaltet und das Speiseeis über die Öffnung 9 ausgegeben. Hierfür wird die Drehrichtung des Rührwerks 14 insbesondere umgekehrt, so dass das Speiseeis mit hoher Kraft durch die Öffnung 9 ausgestoßen wird.

Die erfindungsgemäße Speiseeismaschine hat also den Vorteil, dass sie an den jeweiligen Bedarf besser angepasst werden kann als bekannte Maschinen. Insbesondere kann der Energieverbrauch reduziert werden, indem bei geringerem Kühlleistungsbedarf nur ein Kompressor 23 oder 24 eingeschaltet wird und nur bei hoher erforderlicher Kühlleistung beide Kompressoren 23 und 24. Neben der Reduzierung des Energieverbrauchs kann dadurch auch einer möglichen Kälteempfindlichkeit von Zutaten Rechnung getragen werden, indem ein langsameres Abkühlen durch nur einen Kompressor 23 oder 24 erfolgt.

### Bezugszeichenliste

- 8: Welle
- 9: Ausgabeöffnung
- 10: Speiseeismaschine
- 11: Behälter
- 12: Behälterachse
- 13: Behälterseitenwand
- 14: Rührwerk
- 15: Schabermesser
- 16: Innenseite der Behälterseitenwand
- 17: Innenseite des Behälterbodens
- 18: Behälterboden
- 19: erste Kühlschlange
- 20: zweite Kühlschlange
- 21: erster Kühlkreislauf
- 22: zweiter Kühlkreislauf
- 23: erster Kompressor
- 24: zweiter Kompressor
- 25: Pfeil
- I: Drehachse des Rührwerks

## Patentansprüche

1. Maschine zum Bearbeiten von Lebensmitteln unter mindestens zeitweiser Kühlung derselben, insbesondere Speiseeismaschine, mit einem Behälter (11) und einer Kühleinrichtung, umfassend einen Kühlkreislauf (21) mit einem Kompressor (23) und einem Verdampfer (19), in Form mindestens einer um den Behälter (11) gewundenen Kühlschlange, mindestens einen zweitern Kühlkreislauf (22) mit einem zweiten Kompressor (24) und einem zweiten Verdampfer (20) in Form einer um den Behälter gewundenen Kühlschlange wobei; die die Kühlschlangen (19, 20), parallel zueinander und derart um den Behälter (11) herum angeordnet sind, dass sich die Windungen der jeweiligen Kühlschlangen (19, 20) untereinander abwechsel, wobei die Kühlkreisläufe (21, 22) voneinander setrennt sind und die Kühlkreisläufe wahlweise einsetzbar sind.

2. Maschine nach Anspruch 1,
**dadurch gekennzeichnet, dass**
die Kompressoren (23, 24) gleiche oder unterschiedliche Leistung aufweisen.

3. Maschine nach einem der vorhergehenden Ansprüche,
**dadurch gekennzeichnet, dass**
die Kühlschlangen (19, 20) auf der Außenseite des Behälters (11), insbesondere auf der Außenseite der Seitenwand (13) und der Außenseite des Bodens (18) oder der Stirnwand bei horizontaler Anordnung angeordnet sind und dass im Inneren des Behälters (11) ein Rührwerk (14) vorgesehen ist, dessen Rührmesser (15) mit der Innenwand (16,17) des Behälters in schabendem Eingriff stehen.

4. Maschine nach einem der vorhergehenden Ansprüche,
**dadurch gekennzeichnet, dass**
der Behälter (11) im Bereich seines Bodens (18), insbesondere im Übergangsbereich zwischen Boden (18) und Seitenwand (13), eine Ausgabe- und/oder Ablassöffnung (9) aufweist.

5. Maschine nach Anspruch 3 oder 4,
**dadurch gekennzeichnet, dass**
die Drehrichtung des Rührwerks (14) zum Ausgeben des fertigen Produkts umkehrbar ist.

6. Maschine nach einem der Ansprüche 3 bis 5,
**dadurch gekennzeichnet, dass**
das Rührwerk (14) eine vertikale Drehachse (I) aufweist.

7. Maschine nach einem der vorhergehenden Ansprüche,
**dadurch gekennzeichnet, dass**
die Bearbeitungszeit über den Zeitablauf und/oder die Temperatur und/oder die Konsistenz des behandelten Gutes steuerbar ist.

## Claims

1. A machine for the processing of foods while refrigerating the same at least at times, in particular an ice cream machine, comprising a container (11) and a refrigerating device, including a refrigerating circuit (21) with a compressor (23) and an evaporator (19) in the form of at least one refrigerating coil wound around the container 11; including at least one second refrigerating circuit (22) with a second compressor (24) and a second evaporator (20) in the form of a refrigerating coil wound around the container, wherein the refrigerating coils are arranged parallel to one another and around the container (11) such that the turns of the respective refrigerating coils (19, 20) alternate between one another and wherein the refrigerating circuits (21, 22) are separated from one another and the refrigerating circuits can be selectively used.

2. A machine in accordance with claim 1, **characterized in that** the compressors (23, 34) have the same power or a different power.

3. A machine in accordance with any one of the preceding claims, **characterized in that** the refrigerating coils (19, 20) are arranged on the outer side of the container (11), in particular on the outer side of the side wall (13) and on the outer side of the base (10) or on the end wall, with a horizontal arrangement; and **in that** a stirrer (14) is provided at the interior of the container (11) whose stirrer blades (15) are in scraping engagement with the inner wall (16, 17) of the container.

4. A machine in accordance with any one of the preceding claims, **characterized in that** the container (11) has a delivery opening and/or a discharge opening (9) in the region of its base (18), in particular in the transition region between the base (18) and the side wall (13).

5. A machine in accordance with claim 3 or claim 4, **characterized in that** the direction of rotation of the stirrer (14) is reversible to deliver the finished product.

6. A machine in accordance with any one of claims 3 to 5, **characterized in that** the stirrer (14) has a vertical axis of rotation (I).

7. A machine in accordance with any one of the preceding claims, **characterized in that** the processing time is controllable over the time procedure and/or the temperature and/or the consistency of the treated product.

## Revendications

1. Machine pour le traitement de produits alimentaires sous refroidissement au moins temporaire de ceux-ci, en particulier machine à crème glacée, comprenant un récipient (11) et un système de refroidissement, comprenant un circuit de refroidissement (21) avec un compresseur (23) et un évaporateur (19), sous la forme d'au moins un serpentin de refroidissement enroulé autour du récipient (11), dans laquelle est prévu au moins un second circuit de refroidissement (22) avec un second compresseur (24) et un second évaporateur (20) sous la forme d'un serpentin de refroidissement enroulé autour du récipient (11), tel que les serpentins de refroidissement (19, 20) sont agencés tout autour du récipient (11) parallèlement l'un à l'autre de telle façon que les spires des serpentins de refroidissement respectifs (19, 20) alternent les unes au-dessous des autres, les circuits de refroidissement (21, 22) sont séparés l'un de l'autre, et les circuits de refroidissement peuvent être mis en service de façon sélective.

2. Machine selon la revendication 1,
**caractérisée en ce que** les compresseurs (23, 24) présentent la même puissance ou des puissances différentes.

3. Machine selon l'une des revendications précédentes,
**caractérisée en ce que** les serpentins de refroidissement (19, 20) sont agencés sur la face extérieure du récipient (11), en particulier sur la face extérieure de la paroi latérale (13) et la face extérieure du fond (18) ou de la paroi frontale lors d'un agencement horizontal, et **en ce qu'**il est prévu un agitateur (14) à l'intérieur du récipient (11), dont les lames d'agitateur (15) engagent la paroi intérieure (16, 17) du récipient de manière à la racler.

4. Machine selon l'une des revendications précédentes,
**caractérisée en ce que** le récipient (11) comporte une ouverture de distribution et/ou d'évacuation (9) dans la région de son fond (18), en particulier dans la zone de transition entre le fond (18) et la paroi latérale (13).

5. Machine selon la revendication 4,
**caractérisée en ce que** le sens de rotation de l'agitateur (14) est inversible pour distribuer le produit fini.

6. Machine selon l'une des revendications 3 à 5,
**caractérisée en ce que** l'agitateur (14) a un axe de rotation vertical (1).

7. Machine selon l'une des revendications précédentes,
**caractérisée en ce que** le temps de traitement est susceptible d'être commandé via le déroulement temporel et/ou la température et/ou la consistance du produit traité.
